# EUROPEAN PATENT APPLICATION

(11) **EP 4 528 485 A1**
(43) Date of publication of application: **26.03.2025**
(21) Application number: 23928306.2
(22) Date of filing: 28.09.2023
(51) Int. Cl.: G06F 8/65, G06F 9/4401

(54) **UPGRADING METHOD AND APPARATUS, DEVICE, AND STORAGE MEDIUM**

(30) Priority: 20.03.2023 CN 202310276888
(71) Applicant: Huizhou Desay SV Automotive Co., Ltd., Huizhou, Guangdong 516006 (CN)
(72) Inventor: LI, Yiming, Huizhou, Guangdong 516006 (CN)
(74) Representative: Biallo, Dario
(86) International application number: PCT/CN2023/122506
(87) International publication number: WO 2024/193001

(57) **Abstract**

Provided are an upgrade method and apparatus, a device and a storage medium. The method is performed by a target terminal, and the target terminal is connected to a CAN hardware device and a digital key system. The upgrade method includes: acquiring identification information of the CAN hardware device and a target upgrade mode; determining a target upgrade node according to the target upgrade mode; and upgrading the digital key system according to an upgrade file corresponding to the target upgrade node and the identification information of the CAN hardware device. Therefore, other software does not need to be installed, and the operation is convenient and fast, thereby improving the upgrade efficiency; upgrading does not need to be performed based on a source code, thereby protecting the source code from being exposed.

## Description

This application claims priority to Chinese Patent Application No. 202310276888.0 filed with the China National Intellectual Property Administration (CNIPA) on Mar. 20, 2023, the disclosure of which is incorporated herein by reference in its entirety.

### TECHNICAL FIELD

Embodiments of the present application relate to the field of computer technologies, for example, to an upgrade method and apparatus, a device and a storage medium.

### BACKGROUND

When the upgrade functions of electronic control units (ECUs) of a digital key system are to be developed, original equipment manufacturers (OEMs) generally require that the ECUs of the digital key system should be upgraded through the controller area network (CAN) of the car in two manners including a diagnostic instrument or a car entertainment navigation system and also require that the total time for the upgrade of the digital key system should not exceed 10 minutes. In the development process, the CAN upgrade project is developed based on CAN open environment (CANoe) tools or the ZLG CAN box. However, the CAN upgrade project has a complicated operation interface and requires the installation of other software for configuration, thereby leading to low upgrade efficiency. Moreover, the source codes involved in the developed CAN upgrade project cannot be provided for customers or any organizations or teams other than the research and development team.

### SUMMARY

The embodiments of the present application provide an upgrade method and apparatus, a device and a storage medium. Therefore, other software does not need to be installed, and the operation is convenient and fast, thereby improving the upgrade efficiency; the upgrade does not need to be performed based on a source code, thereby protecting the source code from being exposed.

According to an aspect of the present application, an upgrade method is provided. The method is performed by a target terminal, and the target terminal is separately connected to a CAN hardware device and a digital key system. The upgrade method includes the following steps.

Identification information of the CAN hardware device and a target upgrade mode are acquired.

A target upgrade node is determined according to the target upgrade mode.

The digital key system is upgraded according to an upgrade file corresponding to the target upgrade node and the identification information of the CAN hardware device.

According to another aspect of the present application, an upgrade apparatus is provided. The upgrade apparatus includes an acquisition module, a determination module and an upgrade module.

The acquisition module is configured to acquire identification information of a CAN hardware device and a target upgrade mode.

The determination module is configured to determine a target upgrade node according to the target upgrade mode.

The upgrade module is configured to upgrade a digital key system according to an upgrade file corresponding to the target upgrade node and the identification information of the CAN hardware device.

According to another aspect of the present application, an electronic device is provided. The electronic device includes at least one processor and a memory.

The memory is communicatively connected to the at least one processor.

The memory is configured to store a computer program executable by the at least one processor, and the computer program, when executed by the at least one processor, enables the at least one processor to perform the upgrade method in any of the embodiments of the present application.

According to another aspect of the present application, a computer-readable storage medium is provided. The computer-readable storage medium is configured to store computer instructions for, when executed by a processor, enabling the processor to perform the upgrade method in any of the embodiments of the present application.

In the embodiments of the present application, the identification information of the CAN hardware device and the target upgrade mode are acquired, the target upgrade node is determined according to the target upgrade mode, and the digital key system is upgraded according to the upgrade file corresponding to the target upgrade node and the identification information of the CAN hardware device. Therefore, the problems that the upgrade efficiency is low and the source codes involved in the CAN upgrade project cannot be provided for customers or any organizations or teams other than the research and development team due to the complicated operation interface of the CAN upgrade project and the requirement of the installation of other software for configuration are solved. Other software does not need to be installed, and the operation is convenient and fast, thereby improving the upgrade efficiency. The upgrade does not need to be performed based on a source code, thereby protecting the source code from being exposed.

### BRIEF DESCRIPTION OF DRAWINGS

FIG. 1 is a flowchart of an upgrade method according to Embodiment one of the present application;
FIG. 2 is a structure diagram of an upgrade apparatus according to Embodiment two of the present application; and
FIG. 3 is a structure diagram of an electronic device according to Embodiment three of the present application.

### DETAILED DESCRIPTION

It is to be noted that the terms such as "first", "second" and the like in the specific, claims and drawings of the present application are used to distinguish between similar objects and are not necessarily used to describe a particular order or sequence. It is to be understood that the data so used is interchangeable under suitable circumstances such that the embodiments of the present application described herein may also be implemented in a sequence not illustrated or described herein. In addition, the term "including", "having" or any other variant thereof is intended to encompass a non-exclusive inclusion so that a process, method, system, product or device that includes a series of steps or units not only includes the expressly listed steps or units but also includes other steps or units that are not expressly listed or are inherent to such a process, method, system, product or device.

It is to be understood that, before the solutions disclosed in the embodiments of the present disclosure are implemented, the user shall be notified of the type of personal information involved in the present disclosure, the usage scope, the usage scenario and the like in a suitable manner according to relevant laws and regulations for obtaining authorization by the user.

### Embodiment one

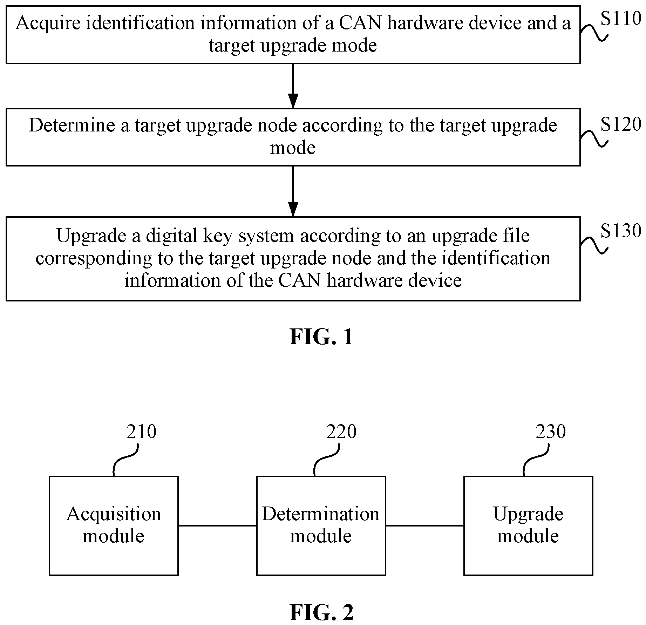

FIG. 1 is a flowchart of an upgrade method according to Embodiment one of the present application. The embodiment herein is applicable to the case of upgrading a digital key system. The method may be performed by an upgrade apparatus in the embodiments of the present application, and the apparatus may be implemented by software and/or hardware. As shown in FIG. 1, the method is performed by a target terminal, and the target terminal is separately connected to a CAN hardware device and a digital key system. The upgrade method specifically includes steps S110, S120 and S130.

In S110, identification information of the CAN hardware device and a target upgrade mode are acquired.

The target terminal may be an operating terminal connected to the CAN hardware device and the digital key system. For example, the target terminal may be a computer. The digital key system may be divided into a master module and a to-be-upgraded module. Multiple to-be-upgraded modules may be configured. The master module includes a preprocessing node and a master control node. The to-be-upgraded module includes a slave control node. The target terminal is separately connected to the CAN hardware device and the digital key system. An upgrade is performed based on the CAN hardware device and the digital key system. The master module in the digital key system communicates with the target terminal via a CAN channel. The target terminal may receive an upgrade file in the digital key system to upgrade the master module and/or the to-be-upgraded module. The to-be-upgraded module in the digital key system may be regarded as a flash partition of the master module to perform upgrade operations. The CAN hardware device communicates with the master module in the digital key system according to a CAN unified diagnostic services (UDS) protocol.

The CAN hardware device man be a CANoe hardware device or a ZLG CAN box. The CAN hardware device required for the upgrade of the digital key system may be determined according to the identification information of the CAN hardware device. For organizations or teams that cannot purchase the CANoe hardware device, the digital key system may be upgraded in combination with a ZLG CAN box, thereby reducing the upgrade cost.

The target upgrade mode may be divided into two modes, a first upgrade mode in which both the main module and the to-be-upgraded module are upgraded and a second upgrade mode in which only the to-be-upgraded module is upgraded. For example, the first upgrade mode may be a platform upgrade mode, and the second upgrade mode may be a single antenna upgrade mode.

Specifically, the identification information of the CAN hardware device and the target upgrade mode may be acquired in the following manner: the target terminal may poll and retrieve a CAN hardware device currently connected to the target terminal, acquire the identification information of the CAN hardware device, and determine the target upgrade mode.

Optionally, the step where the identification information of the CAN hardware device and the target upgrade mode are acquired includes the following steps.

In response to detecting a touch operation from a user on a device loading control in an upgrade interface, a CAN hardware device list is displayed.

In response to detecting a touch operation from the user on a CAN hardware device in the CAN hardware device list, the identification information of the CAN hardware device is acquired.

In response to detecting a touch operation from the user on a target upgrade mode control in the upgrade interface, the target upgrade mode is acquired.

The upgrade interface may include content such as a device loading control, an upgrade mode, a main module, a to-be-upgraded module, a preprocessing node, a main control node, a control node, a version query, an upgrade progress display box, and the like. The CAN hardware device list may contain identification information corresponding to at least one CAN hardware device.

Specifically, in response to detecting the touch operation from the user on the device loading control in the upgrade interface, the CAN hardware device list may be displayed in the following manner: in response to detecting that the user clicks the device loading control in the upgrade interface, the CAN hardware devices connected to the target terminal are polled and retrieved, and the CAN hardware device list is displayed.

Specifically, in response to detecting the touch operation from the user on the CAN hardware device in the CAN hardware device list, the identification information of the CAN hardware device may be acquired in the following manner: a desired CAN hardware device is selected from the displayed CAN hardware device list, and in response to detecting that the user clicks and selects a desired CAN hardware device, the identification information of the CAN hardware device corresponding to the selected CAN hardware is acquired.

Specifically, in response to detecting the touch operation from the user on the target upgrade mode control in the upgrade interface, the target upgrade mode may be acquired in the following manner: the user clicks the target upgrade mode control in the upgrade interface to determine the target upgrade mode.

In S 120, a target upgrade node is determined according to the target upgrade mode.

The target upgrade node herein is a to-be-upgraded node selected according to actual requirements from the master module and/or the to-be-upgraded module in the digital key system. The master module includes a preprocessing node and a master control node, and the to-be-upgraded module includes a slave control node.

Specifically, the target upgrade node may be determined according to the target upgrade mode in the following manner: after the target upgrade mode is determined, a master module that needs to be upgraded and/or a to-be-upgraded module that needs to be upgraded are selected, a preprocessing node and a master control node that needs to be upgraded are selected from the master module that needs to be upgraded, a slave control node that needs to be upgraded is selected from the to-be-upgraded module that needs to be upgraded, and the preprocessing node, the master control node that needs to be upgraded and the slave control node that needs to be upgraded are all taken as the target upgrade node. The target upgrade node may also be determined according to the target upgrade mode in the following manner: a corresponding to-be-upgraded node set is determined according to the target upgrade mode, the to-be-upgraded node set is updated according to a node that is selected by the user and needs to be upgraded, and the target upgrade node is determined according to the updated to-be-upgraded node set.

Optionally, the step where the target upgrade node is determined according to the target upgrade mode includes the following steps.

If the target upgrade mode is a first upgrade mode, a first to-be-upgraded node set is generated according to a preprocessing node, a master control node and a slave control node, and the target upgrade node is determined according to the first to-be-upgraded node set.

If the target upgrade mode is a second upgrade mode, a second to-be-upgraded node set is generated according to the slave control node, and the target upgrade node is determined according to the second to-be-upgraded node set.

The master control node herein may include a BOOT upgrade node, an application (APP) upgrade node and a Bluetooth low energy (BLE) upgrade node. The slave control node herein may include a BOOT upgrade node, a microcontroller unit (MCU) upgrade node and a BLE upgrade node. It is to be noted that the APP upgrade node may denote the application software of the MCU of the master module, and the BLE upgrade node may denote BLE and BLE&ultra-wideband (UWB). If the BOOT upgrade node in the slave control node is selected to be upgraded, the master control node, the MCU upgrade node in the slave control node and the BLE upgrade node in the slave control node cannot be upgraded. If the master control node, the MCU upgrade node in the slave control node and the BLE upgrade node in the slave control node are selected to be upgraded, the BOOT upgrade node in the slave control node cannot be upgraded. It is to be noted that the preprocessing node needs to be selected only when the master module in the digital key system is upgraded. That is, in the first upgrade mode, if the user selects a first upgrade node in the master controller of the master module, the preprocessing node must be selected, and the CAN upgrade protocol services adapted to different vehicle manufacturers are selected based on the preprocessing node to preprocess the digital key system.

The first to-be-upgraded node set is all the nodes when the target upgrade mode is the first upgrade mode, including the preprocessing node, the master control node and all the slave control nodes, and the second to-be-upgraded node set is all the slave control nodes when the target upgrade mode is the second upgrade mode.

Specifically, if the target upgrade mode is the first upgrade mode, the first to-be-upgraded node set is generated according to the preprocessing node, the master control node and the slave control node, and the target upgrade node may be determined according to the first to-be-upgraded node set in the following manner: in response to detecting a touch operation from the user on a first upgrade mode control, the first to-be-upgraded node set is generated according to the preprocessing node, the master control node and the slave control node, a to-be-upgraded upgrade node that needs to be upgraded is selected according to actual requirements, and the target upgrade node is determined according to the first to-be-upgraded node set and the to-be-upgraded upgrade node that needs to be upgraded.

Specifically, if the target upgrade mode is the second upgrade mode, the second to-be-upgraded node set is generated according to the slave control node, and the target upgrade node may be determined according to the second to-be-upgraded node set in the following manner: in response to detecting a touch operation from the user on a second upgrade mode control, the second to-be-upgraded node set is generated according to all the slave control nodes, a to-be-upgraded upgrade node that needs to be upgraded is selected according to actual requirements, and the target upgrade node is determined according to the second to-be-upgraded node set and the to-be-upgraded upgrade node that needs to be upgraded.

Optionally, the step where the target upgrade node is determined according to the first to-be-upgraded node set includes the following steps.

In response to detecting a touch operation from the user on a first to-be-upgraded node in the master control node, a second to-be-upgraded node in the slave control node is deleted from the first to-be-upgraded node set, and the target upgrade node is determined according to the first to-be-upgraded node.

In response to detecting a touch operation from the user on a third to-be-upgraded node in the slave control node, the second to-be-upgraded node in the slave control node is deleted from the first to-be-upgraded node set, and the target upgrade node is determined according to the third to-be-upgraded node.

In response to detecting a touch operation from the user on the second to-be-upgraded node in the slave control node, the first to-be-upgraded node set is cleared, and the target upgrade node is determined according to the second to-be-upgraded node.

The first to-be-upgraded node herein may be at least one to-be-upgraded node among the BOOT upgrade node, the APP upgrade node and the BLE upgrade node in the master controller. The second to-be-upgraded node herein may be the BOOT upgrade node in the slave controller. The third to-be-upgraded node herein may be at least one to-be-upgraded node between the MCU upgrade node and the BLE upgrade node in the slave controller.

Specifically, in response to detecting the touch operation from the user on the first to-be-upgraded node in the master control node, the second to-be-upgraded node in the slave control node is deleted from the first to-be-upgraded node set, and the target upgrade node may be determined according to the first to-be-upgraded node in the following manner: when the target upgrade mode is the first upgrade mode, the second to-be-upgraded nodes in all the slave control nodes are deleted from the first to-be-upgraded node set in response to detecting that the user selects the first to-be-upgraded node in the master control node to be upgraded, and the first to-be-upgraded node selected by the user is determined to be the target upgrade node. The target upgrade node may also be determined according to the first to-be-upgraded node in the following manner: the target upgrade node is determined according to the first to-be-upgraded node selected by the user and the third to-be-upgraded node selected by the user from the slave control node in a to-be-upgraded module selected by default. The target upgrade node may also be determined according to the first to-be-upgraded node in the following manner: the target upgrade node is determined according to the first to-be-upgraded node selected by the user and the third to-be-upgraded node selected by the user from the slave control node in a to-be-upgraded module selected by the user. For example, when the target upgrade mode is the platform upgrade mode, if the user selects the BOOT upgrade node and the APP upgrade node in the master controller to be upgraded, the BOOT upgrade node in the slave controller is deleted from the first to-be-upgraded node set, that is, the BOOT upgrade node in the slave controller cannot be selected to be upgraded, and the preprocessing node, the BOOT upgrade node and the APP upgrade node are determined to be the target upgrade node.

Specifically, in response to detecting the touch operation from the user on the third to-be-upgraded node in the slave control node, the second to-be-upgraded node in the slave control node is deleted from the first to-be-upgraded node set, and the target upgrade node may be determined according to the third to-be-upgraded node in the following manner: when the target upgrade mode is the first upgrade mode, the second to-be-upgraded nodes in all the slave control nodes are deleted from the first to-be-upgraded node set in response to detecting that the user selects the third to-be-upgraded node in the slave control node to be upgraded, and the target upgrade node is determined according to the third to-be-upgraded node selected by the user. The target upgrade node may also be determined according to the third to-be-upgraded node in the following manner: the target upgrade node is determined according to the third to-be-upgraded node selected by the user and the first to-be-upgraded node selected by the user. For example, when the target upgrade mode is the platform upgrade mode, if the user selects the MCU upgrade node in the slave controller to be upgraded, the BOOT upgrade node in the slave controller is deleted from the first to-be-upgraded node set, that is, the BOOT upgrade node in the slave controller cannot be selected to be upgraded, and the preprocessing node and the MCU upgrade node in the slave controller are determined to be the target upgrade node.

Specifically, in response to detecting the touch operation from the user on the second to-be-upgraded node in the slave control node, the first to-be-upgraded node set is cleared, and the target upgrade node may be determined according to the second to-be-upgraded node in the following manner: when the target upgrade mode is the first upgrade mode, the first to-be-upgraded node set is directly cleared in response to detecting that the user selects the second to-be-upgraded node in the slave control node to be upgraded, and the second to-be-upgraded node in the slave control node is determined to be the target upgrade node. For example, when the target upgrade mode is the platform upgrade mode, if the user selects the BOOT upgrade node in the slave controller to be upgraded, the BOOT upgrade node in the slave controller is determined to be the target upgrade node.

Optionally, the step where the target upgrade node is determined according to the first to-be-upgraded node set includes the following steps.

A target to-be-upgraded module is acquired.

The target upgrade node is determined according to the target to-be-upgraded module and the first to-be-upgraded node set.

The target to-be-upgraded module herein may be a default to-be-upgraded module or a target to-be-upgraded module selected by the user according to actual requirements. For example, when multiple to-be-upgraded modules may exist, the target to-be-upgraded module may be determined according to the identification information corresponding to the to-be-upgraded module, where the identification information corresponding to the to-be-upgraded module may be the serial number of the to-be-upgraded module.

Specifically, the target to-be-upgraded module may be acquired in the following manner: in response to detecting a touch operation from the user on a to-be-upgraded module control in the upgrade interface, a to-be-upgraded module list is displayed, and in response to detecting a touch operation from the user on the identification information corresponding to the target to-be-upgraded module in the to-be-upgraded module list, the target to-be-upgraded module is acquired.

Specifically, the target upgrade node may be determined according to the target to-be-upgraded module and the first to-be-upgraded node set in the following manner: a target to-be-upgraded module is determined; a to-be-upgraded node corresponding to the target to-be-upgraded module is determined according to the target to-be-upgraded module; if a second to-be-upgraded node in the slave controller of the target to-be-upgraded module is selected, the first to-be-upgraded node set is cleared, and the second to-be-upgraded node in the slave controller of the target to-be-upgraded module is determined to be the target upgrade node; if a third to-be-upgraded node in the slave controller of the target to-be-upgraded module is selected, the second to-be-upgraded node in the slave controller of the target to-be-upgraded module is deleted from the first to-be-upgraded node set, and a first to-be-upgraded node selected by the user from the master controller of a master module, the preprocessing node and the third to-be-upgraded node are determined to be the target upgrade node. For example, if the target upgrade mode is the platform upgrade mode, the selected target upgrade module is Upgrade module No. 3, the BOOT upgrade node of Upgrade module No. 3 is selected, and the BOOT upgrade node of Upgrade module No. 3 is the target upgrade node. If the target upgrade mode is the platform upgrade mode, the selected target upgrade module is Upgrade module No. 3, the BOOT upgrade node and the APP upgrade node in the master controller are selected, the MCU upgrade node and the BLE upgrade node in the slave controller of Upgrade module No. 3 are selected, and the preprocessing node, the BOOT upgrade node and the APP upgrade node in the master controller, the MCU upgrade node of Upgrade module No. 3 and the BLE upgrade node of Upgrade module No. 3 are selected as the target upgrade node.

Optionally, the step where the target upgrade node is determined according to the second to-be-upgraded node set includes the following steps.

In response to detecting a touch operation from the user on a second to-be-upgraded node in the slave control node, the second to-be-upgraded node set is cleared, and the target upgrade node is determined according to the second to-be-upgraded node.

In response to detecting a touch operation from the user on a third to-be-upgraded node in the slave control node, the second to-be-upgraded node in the slave control node is deleted from the second to-be-upgraded node set, and the target upgrade node is determined according to the third to-be-upgraded node.

Specifically, in response to detecting the touch operation from the user on the second to-be-upgraded node in the slave control node, the second to-be-upgraded node set is cleared, and the target upgrade node may be determined according to the second to-be-upgraded node in the following manner: when the target upgrade mode is the second upgrade mode, the second to-be-upgraded node set is directly cleared in response to detecting that the user selects the second to-be-upgraded node in the slave control node to be upgraded, and the second to-be-upgraded node selected by the user from the slave control node is directly determined to be the target upgrade node. For example, when the target upgrade mode is the single antenna upgrade mode, if the user selects the BOOT upgrade node in the slave controller to be upgraded, the second to-be-upgraded node set is directly cleared, and the BOOT upgrade node selected by the user from the slave controller is determined to be the target upgrade node.

Specifically, in response to detecting the touch operation from the user on the third to-be-upgraded node in the slave control node, the second to-be-upgraded node in the slave control node is deleted from the second to-be-upgraded node set, and the target upgrade node may be determined according to the third to-be-upgraded node in the following manner: when the target upgrade mode is the second upgrade mode, the second to-be-upgraded node in the slave control node is deleted from the second to-be-upgraded node set in response to detecting that the user selects the third to-be-upgraded node in the slave control node to be upgraded, and the third to-be-upgraded node selected by the user from the slave control node is determined to be the target upgrade node. For example, when the target upgrade mode is the single antenna upgrade mode, if the user selects the MCU upgrade node in the slave controller to be upgraded, the BOOT upgrade node in the slave controller is deleted from the second to-be-upgraded node set, and the MCU upgrade node selected by the user from the slave controller is determined to be the target upgrade node.

It is to be noted that in the second upgrade mode, if no target upgrade module is selected and the second to-be-upgraded node or the third to-be-upgraded node in the slave controller is directly selected, the second to-be-upgraded node or the third to-be-upgraded node in the slave controller of the default upgrade module is upgraded; if the target upgrade module is determined, the second to-be-upgraded node or the third to-be-upgraded node in the slave controller of the target upgrade module is upgraded.

In S130, the digital key system is upgraded according to an upgrade file corresponding to the target upgrade node and the identification information of the CAN hardware device.

Specifically, the digital key system may be upgraded according to the upgrade file corresponding to the target upgrade node and the identification information of the CAN hardware device in the following manner: after the identification information of the CAN hardware device is determined, the upgrade file corresponding to the target upgrade node is loaded according to the target upgrade node to upgrade the digital key system. It is to be noted that when the upgrade file is loaded, verification needs to be performed on the upgrade file. The verification may include determining whether the upgrade file is complete, determining whether the upgrade file is tampered with, and determining whether the upgrade file is loaded incorrectly. If the verification passes, the digital key system is upgraded. If the verification fails, the digital key system is stopped from being upgraded. The verification process of the upgrade file and the upgrade progress of the digital key system may be displayed in the upgrade interface.

In the solution in the embodiment herein, the identification information of the CAN hardware device and the target upgrade mode are acquired, the target upgrade node is determined according to the target upgrade mode, and the digital key system is upgraded according to the upgrade file corresponding to the target upgrade node and the identification information of the CAN hardware device. Therefore, the problems that the upgrade efficiency is low and the source codes involved in the CAN upgrade project cannot be provided for customers or any organizations or teams other than the research and development team due to the complicated operation interface of the CAN upgrade project and the requirement of the installation of other software for configuration are solved. Other software does not need to be installed, and the operation is convenient and fast, thereby improving the upgrade efficiency. The upgrade does not need to be performed based on a source code, thereby protecting the source code from being exposed.

### Embodiment two

FIG. 2 is a structure diagram of an upgrade apparatus according to Embodiment two of the present application. The embodiment herein is applicable to the case of upgrading a digital key system. The apparatus may be implemented by software and/or hardware and may be integrated into any device that provides upgrade functions. As shown in FIG. 2, the upgrade apparatus specifically includes an acquisition module 210, a determination module 220 and an upgrade module 230.

The acquisition module 210 is configured to acquire identification information of a CAN hardware device and a target upgrade mode.

The determination module 220 is configured to determine a target upgrade node according to the target upgrade mode.

The upgrade module 230 is configured to upgrade a digital key system according to an upgrade file corresponding to the target upgrade node and the identification information of the CAN hardware device.

Optionally, the acquisition module is specifically configured to perform the following operations.

**In** response to detecting a touch operation from a user on a device loading control in an upgrade interface, a CAN hardware device list is displayed.

In response to detecting a touch operation from the user on a CAN hardware device in the CAN hardware device list, the identification information of the CAN hardware device is acquired.

In response to detecting a touch operation from the user on a target upgrade mode control in the upgrade interface, the target upgrade mode is acquired.

Optionally, the determination module is specifically configured to perform the following operations.

If the target upgrade mode is a first upgrade mode, a first to-be-upgraded node set is generated according to a preprocessing node, a master control node and a slave control node, and the target upgrade node is determined according to the first to-be-upgraded node set.

If the target upgrade mode is a second upgrade mode, a second to-be-upgraded node set is generated according to the preprocessing node and the slave control node, and the target upgrade node is determined according to the second to-be-upgraded node set.

Optionally, the determination module is specifically configured to perform the following operations.

In response to detecting a touch operation from the user on a first to-be-upgraded node in the master control node, a second to-be-upgraded node in the slave control node is deleted from the first to-be-upgraded node set, and the target upgrade node is determined according to the first to-be-upgraded node.

In response to detecting a touch operation from the user on a third to-be-upgraded node in the slave control node, the second to-be-upgraded node in the slave control node is deleted from the first to-be-upgraded node set, and the target upgrade node is determined according to the third to-be-upgraded node.

In response to detecting a touch operation from the user on the second to-be-upgraded node in the slave control node, the first to-be-upgraded node set is cleared, and the target upgrade node is determined according to the second to-be-upgraded node.

Optionally, the determination module is specifically configured to perform the following operations.

In response to detecting a touch operation from the user on a second to-be-upgraded node in the slave control node, the second to-be-upgraded node set is cleared, and the target upgrade node is determined according to the second to-be-upgraded node.

In response to detecting a touch operation from the user on a third to-be-upgraded node in the slave control node, the second to-be-upgraded node in the slave control node is deleted from the second to-be-upgraded node set, and the target upgrade node is determined according to the third to-be-upgraded node.

Optionally, the determination module is specifically configured to perform the following operations.

A target to-be-upgraded module is acquired.

The target upgrade node is determined according to the target to-be-upgraded module and the first to-be-upgraded node set.

The aforementioned product can execute the method provided in any of the embodiments of the present application and has functional modules and beneficial effects corresponding to the execution method.

### Embodiment three

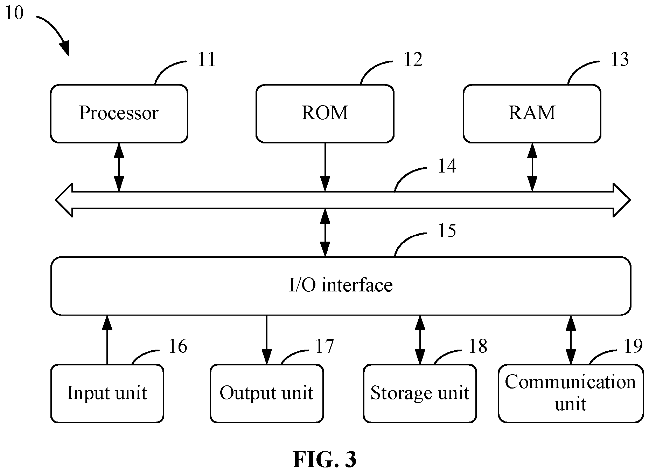

FIG. 3 is a structure diagram of an electronic device according to Embodiment three of the present application. The electronic device is intended to represent various forms of digital computers, such as laptops, desktops, workstations, personal digital assistants, servers, blade servers, mainframes, and other suitable computers. The electronic device may also represent various forms of mobile devices, such as personal digital assistants, cellular telephones, smart phones, wearable devices (such as helmets, spectacles, watches, and the like), and other similar computing devices. The components shown here, their connections and relationships, and their functions, are meant to be exemplary only and are not intended to limit implementations of the present application described and/or claimed in this document.

As shown in FIG. 3, the electronic device 10 may include at least one processor 11 and a memory connected to the at least one processor 11, such as a read-only memory (ROM) 12 and a random-access memory (RAM) 13. The memory is configured to store a computer program executable by the at least one processor, and the processor 11 may perform various suitable actions and processes according to the computer program stored in the ROM 12 or the computer program loaded into the RAM 13 from a storage unit 18. The RAM 13 also stores various programs and data required for the operation of the electronic device 10. The processor 11, the ROM 12 and the RAM 13 are connected to each other via a bus 14. An input/output (I/O) interface 15 is also connected to the bus 14.

Multiple components in the electronic device 10 are connected to the I/O interface 15: an input unit 16 such as a keyboard, a mouse or the like; an output unit 17 such as various displays and loudspeakers; a storage unit 18 such as a magnetic disk, an optical disk or the like; and a communication unit 19 such as a network card, a modem, a radio communication transceiver. The communication unit 19 allows the electronic device 10 to exchange information/data with other devices via, for example, computer networks, such as the Internet, and/or various telecommunication networks.

The processor 11 may be various general-purpose and/or special-purpose processing components having processing and computing capabilities. Some examples of the processor 11 include, but are not limited to, a central processing unit (CPU), a graphic processing unit (GPU), various special-purpose artificial intelligence (AI) computing chips, various processors running machine learning model algorithms, a digital signal processor (DSP), and any suitable processors, controllers, microcontrollers and the like. The processor 11 executes various methods and processes described above, such as the upgrade method.

In some embodiments, the upgrade method may be implemented as a computer program tangibly embodied in a computer-readable storage medium such as the storage unit 18. In some embodiments, part or entire of the computer program may be loaded and/or installed on the electronic device 10 via the ROM 12 and/or the communication unit 19. When the computer program is loaded on the RAM 13 and executed by the processor 11, one or more steps of the upgrade method described above may be executed. Alternatively, in other embodiments, the processor 11 may be configured to execute the upgrade method by any other suitable means (for example, by means of firmware).

Various embodiments of the systems and technologies described herein may be implemented in a digital electronic circuit system, an integrated circuit system, a field-programmable gate array (FPGA), an application-specific integrated circuit (ASIC), an application-specific standard product (ASSP), a system-on-a-chip system (SOC), a complex programmable logic device (CPLD), computer hardware, firmware, software, and/or a combination thereof. The various embodiments may include: implementation in one or more computer programs that are executable and/or interpretable on a programmable system including at least one programmable processor that may be a special-purpose or general-purpose programmable processor and may receive data and instructions from, and transmit data and instructions to, a storage system, at least one input apparatus, and at least one output apparatus.

The computer program for performing the method of the present application may be written using any combination of one or more programming languages. These computer programs may be provided for the processor of the general-purpose computer, the special-purpose computer or other programmable data processing device such that the computer programs cause the functions/operations specified in the flowcharts and/or block diagrams to be implemented when executed by the processor. The computer program may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program for use by or in connection with an instruction execution system, apparatus or device. The computer-readable storage medium may be, but is not limited to, an electrical, magnetic, optical, electromagnetic, infrared or semiconductor system, apparatus or device, or any suitable combination thereof. Alternatively, the computer-readable medium may be a machine-readable signal medium. More specific examples of the machine-readable storage medium may include an electrical connection having one or more wires, a portable computer diskette, a hard disk, a RAM, a ROM, an erasable programmable read-only memory (EPROM or flash memory), an optical fiber, a portable compact disc read-only memory (CD-ROM), an optical storage device, a magnetic storage device, or any suitable combination thereof.

To provide for interaction with a user, the systems and technologies described herein may be implemented on an electronic device having a display apparatus (for example, a cathode ray tube (CRT) or liquid crystal display (LCD) monitor) for displaying information to the user as well as a keyboard and a pointing device (for example, a mouse or a trackball) by which the user can provide input to the computer. Other kinds of devices may be used to provide for interaction with a user as well; for example, feedback provided for the user may be any form of sensory feedback (for example, visual feedback, auditory feedback or tactile feedback; and input from the user may be received in any form (including acoustic, speech or tactile input).

The systems and technologies described herein may be implemented in a computing system that includes a back-end component (for example, as a data server), a computing system that includes a middleware component (for example, an application server), a computing system that includes a front-end component (for example, a user computer having a graphical user interface or a Web browser through which the user can interact with an implementation of the systems and technologies described herein), or a computing system that includes any combination of such a back-end, middleware or front-end component. The components of the system may be interconnected by any form or medium of digital data communication (for example, a communications network). Examples of the communications network include a local area network (LAN), a wide area network (WAN), a blockchain network, and the Internet.

The computing system may include a client and a server. The client and the server are generally remote from each other and usually interact through a communication network. The relationship between the client and the server arises by virtue of computer programs that run on corresponding computers and have a client-server relationship with each other. The server may be a cloud server, also referred to as a cloud computing server or a cloud host, which is a host product in a cloud computing service system to overcome the defects of large management difficulty and poor service extensibility in a conventional physical host and a VPS service.

It is to be understood that various forms of processes shown above can be used to reorder, add, or delete steps. For example, the steps described in the present application may be performed in parallel, may be performed in sequence, or may be performed in different sequences, as long as the desired results of the solutions of the present application can be implemented, which is not limited herein.

The foregoing specific embodiments do not constitute a limitation on the protection scope of the present application. It should be understood by those skilled in the art that various modifications, combinations, sub-combinations, and substitutions may be made according to the design requirements and other factors. Any modifications, equivalent substitutions, and improvements made within the spirit and principle of the present application should fall within the protection scope of the present application.

## Claims

1. An upgrade method, performed by a target terminal, wherein the target terminal is separately connected to a controller area network, CAN, hardware device and a digital key system, and the upgrade method comprises:
acquiring identification information of the CAN hardware device and a target upgrade mode;
determining a target upgrade node according to the target upgrade mode; and
upgrading the digital key system according to an upgrade file corresponding to the target upgrade node and the identification information of the CAN hardware device.

2. The upgrade method according to claim 1, wherein acquiring the identification information of the CAN hardware device and the target upgrade mode comprises:
in response to detecting a touch operation from a user on a device loading control in an upgrade interface, displaying a CAN hardware device list;
in response to detecting a touch operation from the user on a CAN hardware device in the CAN hardware device list, acquiring the identification information of the CAN hardware device; and
in response to detecting a touch operation from the user on a target upgrade mode control in the upgrade interface, acquiring the target upgrade mode.

3. The upgrade method according to claim 1, wherein determining the target upgrade node according to the target upgrade mode comprises:
in response to the target upgrade mode being a first upgrade mode, generating a first to-be-upgraded node set according to a preprocessing node, a master control node and a slave control node, and determining the target upgrade node according to the first to-be-upgraded node set; and
in response to the target upgrade mode being a second upgrade mode, generating a second to-be-upgraded node set according to the slave control node, and determining the target upgrade node according to the second to-be-upgraded node set.

4. The upgrade method according to claim 3, wherein determining the target upgrade node according to the first to-be-upgraded node set comprises:
in response to detecting a touch operation from a user on a first to-be-upgraded node in the master control node, deleting a second to-be-upgraded node in the slave control node from the first to-be-upgraded node set, and determining the target upgrade node according to the first to-be-upgraded node;
in response to detecting a touch operation from a user on a third to-be-upgraded node in the slave control node, deleting a second to-be-upgraded node in the slave control node from the first to-be-upgraded node set, and determining the target upgrade node according to the third to-be-upgraded node; or
in response to detecting a touch operation from a user on a second to-be-upgraded node in the slave control node, clearing the first to-be-upgraded node set, and determining the target upgrade node according to the second to-be-upgraded node.

5. The upgrade method according to claim 3, wherein determining the target upgrade node according to the second to-be-upgraded node set comprises:
in response to detecting a touch operation from a user on a second to-be-upgraded node in the slave control node, clearing the second to-be-upgraded node set, and determining the target upgrade node according to the second to-be-upgraded node; or
in response to detecting a touch operation from a user on a third to-be-upgraded node in the slave control node, deleting a second to-be-upgraded node in the slave control node from the second to-be-upgraded node set, and determining the target upgrade node according to the third to-be-upgraded node.

6. The upgrade method according to claim 3, wherein determining the target upgrade node according to the first to-be-upgraded node set comprises:
acquiring a target to-be-upgraded module; and
determine the target upgrade node according to the target to-be-upgraded module and the first to-be-upgraded node set.

7. An upgrade apparatus, comprising:
an acquisition module configured to acquire identification information of a controller area network, CAN, hardware device and a target upgrade mode;
a determination module configured to determine a target upgrade node according to the target upgrade mode; and
an upgrade module configured to upgrade a digital key system according to an upgrade file corresponding to the target upgrade node and the identification information of the CAN hardware device.

8. The upgrade apparatus according to claim 7, wherein the acquisition module is configured to:
in response to detecting a touch operation from a user on a device loading control in an upgrade interface, display a CAN hardware device list;
in response to detecting a touch operation from the user on a CAN hardware device in the CAN hardware device list, acquire the identification information of the CAN hardware device; and
in response to detecting a touch operation from the user on a target upgrade mode control in the upgrade interface, acquire the target upgrade mode.

9. An electronic device, comprising:
at least one processor; and
a memory communicatively connected to the at least one processor;
wherein a computer program executable by the at least one processor is stored in the memory, and the computer program, when executed by the at least one processor, enables the at least one processor to perform the upgrade method according to any one of claims 1 to 6.

10. A computer-readable storage medium storing computer instructions, wherein the computer instructions, when executed by a processor, enable the processor to perform the upgrade method according to any one of claims 1 to 6.
